# EUROPÄISCHE PATENTSCHRIFT

(11) **EP 3 305 589 B1**
(45) Veröffentlichungstag und Bekanntmachung des Hinweises auf die Patenterteilung: **14.10.2020**
(21) Anmeldenummer: 17194706.2
(22) Anmeldetag: 04.10.2017
(51) Int. Cl.: B60P 1/44

(54) **LADEBORDWAND MIT STURZSICHERUNG**
TAIL-LIFT WITH FALL PROTECTION
HAYON ÉLÉVATEUR POURVU DE PROTECTION CONTRE LES CHUTES

(30) Priorität: 05.10.2016 DE 202016006213 U
(43) Veröffentlichungstag der Anmeldung: 11.04.2018
(73) Patentinhaber: Bömer, Berthold, 48493 Wettringen (DE)
(72) Erfinder: Bömer, Berthold, 48493 Wettringen (DE)
(74) Vertreter: Habbel, Ludwig

(56) Entgegenhaltungen:
- WO-A1-2012/137005
- DE-U1- 9 417 888
- DE-U1-202012 105 102
- JP-A- 2003 118 473

## Beschreibung

Die Erfindung betrifft eine mit einer höhenverstellbaren Plattform versehene Ladebordwand mit einer Sturzsicherung, sowie eine solche Sturzsicherung. Eine Ladebordwand ist typischerweise am Heck eines LKW montiert und wird auch als Hubladebühne bezeichnet. Ihre Plattform ist wie ein Lift zwischen dem Bodenniveau und dem Niveau des Ladebodens eines LKW höhenverstellbar, um das Be- und Entladen des LKWs zu erleichtern. Steuerungselemente wie z. B. Taster oder Schalter, um die Plattform auf- oder abwärts zu steuern, sind häufig in die Plattform integriert und nahe am Rand der Plattform angeordnet, so dass ein Benutzer diese Steuerungselemente mit seinem Fuß betätigen kann. Hierzu muss sich der Benutzer zwangsläufig in der Nähe des Randes der Plattform aufhalten.

Um zu vermeiden, dass der Benutzer versehentlich von der Plattform abstürzt, ist als am nächsten kommender Stand der Technik eine Sturzsicherung der Fa. Dhollandia / Lokeren / Belgien bekannt und unter der folgenden URL zu sehen: http://www.dhollandia.com/nl/nl/112/Veiligheidsrails-enzijdelingse-oprijrampen-voor-onderschuiflaadkleppen

Die Stützen der Geländer sind auf der Plattform der Ladebordwand um eine liegende, in Längsrichtung verlaufende Achse schwenkbar gelagert, so dass die Stützen in Querrichtung zwischen einer liegenden Ruhestellung und einer aufrechten Gebrauchsstellung beweglich sind. Die Begriffe bzw. Richtungsangaben "längs" und "quer" beziehen sich im Rahmen des vorliegenden Vorschlags nicht auf die längeren und kürzeren Abmessungen eines Bauteils, beispielsweise der Stütze, sondern auf das Fahrzeug. Die Längsrichtung verläuft dementsprechend in Längs- bzw. Fahrtrichtung des LKWs und die Querrichtung verläuft quer dazu.

Zusätzlich zu dieser Schwenkbeweglichkeit können die Geländer bei der bekannten Sturzsicherung um eine Hochachse geschwenkt werden, wenn sich die Stützen in ihrer Gebrauchsstellung befinden. Die Geländer können daher beispielsweise in Längsrichtung ausgerichtet werden oder quer dazu.

Auch die gattungsgemäße WO 2012/137005 A1 zeigt eine solche Sturzsicherung. Mittels einer Befestigungslasche wird die Stütze ortsfest auf der Plattform montiert. Die Stütze kann um eine in Längsrichtung verlaufende Achse geschwenkt und flach auf die Plattform gelegt werden, oder in ihre aufrechte Gebrauchsstellung geschwenkt werden. Die Stütze ermöglicht eine Schwenkbewegung um ihre Hochachse in der Art, dass die Stütze einen unteren und einen oberen Abschnitt aufweist, und der obere Abschnitt, der auch das Geländer trägt, gegenüber dem unteren Abschnitt um die gemeinsame Mittelachse beider Abschnitte geschwenkt werden kann und in zwei unterschiedlichen Schwenkstellungen an dem unteren Abschnitt arretiert werden kann. Abgesehen von der Möglichkeit, die Stütze zwischen ihrer liegenden Ruhestellung und der aufrechten Gebrauchsstellung bewegen zu können, verbleibt der Fußpunkt der Stütze stets ortsfest an derselben Stelle auf der Plattform, nämlich dort, wo sich die Befestigungslasche befindet, an welcher die Stütze schwenkbar gelagert ist.

Aus der JP 2003 118 473 A ist eine Sturzsicherung für eine mobile Plattform eines Fahrzeugs bekannt, bei welcher die Stütze in ihrem unteren Bereich als Parallelogrammbeschlag ausgestaltet ist, so dass sie im Bereich ihres Fußpunktes vergleichsweise viel Bauraum erfordert und dementsprechend vergleichsweise viel Fläche der Plattform beansprucht. Die Plattform ist in dieser Druckschrift als faltbare Plattform mit einem ersten, größeren Abschnitt und einem zweiten, kleineren Abschnitt ausgestaltet. An zwei gegenüberliegenden Seiten des größeren Abschnitts sind zwei Sturzsicherungen angeordnet. Der kleinere Abschnitt der Plattform kann den größeren Abschnitt verlängern, jedoch auch wahlweise auf den größeren Abschnitt und zwischen die beiden Sturzsicherungen gelegt werden. Bei der dazu erforderlichen Schwenkbewegung werden die Sturzsicherungen mittels ihrer Parallelogrammbeschläge automatisch aus der aufrechten Gebrauchsstellung in ihre liegende Ruhestellung geführt. Hierzu ist vorgesehen, dass eine Strebe des Parallelogrammschlags am großen Abschnitt und eine andere Strebe des Parallelogrammbeschlags am kleineren Abschnitt der Plattform anscharniert ist. Die Fußpunkte der Stützen, wo diese an den größeren Abschnitt der Plattform anschließen, verbleiben dabei jeweils ortsfest an derselben Stelle der Plattform.

Aus der DE 20 2012 105 102 U1 ist eine schwenkbare Ladebordwand bekannt, die ein klappbares Verladegestell insbesondere zum Schutz der Ladung aufweist. Die Fußpunkte eines Klapprahmens, wo diese an die Ladeplattform der Ladebordwand anschließen, sind als Klappgelenke ausgestaltet verbleiben dabei jeweils ortsfest an derselben Stelle der Plattform.

Aus der DE 94 17 888 U1 ist eine Ladeplattform eines Kühlfahrzeugs bekannt. Eine Sturzsicherung ist in Form von Sicherungsklappen vorgesehen, die in die Ladeplattform integriert sind. In einer Ruhestellung liegen die Sicherungsklappen flächenbündig in der überfahrenen Fläche der Ladeplattform. In ihrer Gebrauchs- oder Sicherungsstellung ragen die Sicherungsklappen aus der Ladeplattform nach oben. Stets befinden sie sich in der Ladeplattform, wobei sie je nach Gebrauchs- oder Ruhestellung lediglich unterschiedlich weit in die Ladeplattform eintauchen.

Aus der DE 94 17 888 U1 ist ein Kühlfahrzeug bekannt, dessen Ladeplattform mit mehreren Sicherungsklappen ausgestattet ist. Die Sicherungsklappen befinden sich innerhalb der Ladeplattform und liegen in ihrer Ruhestellung jeweils flächenbündig in der überfahrbaren Fläche der Ladeplattform. Aus dieser geschlossenen Stellung können die Sicherungsklappen geöffnet werden, so dass sie ihre Gebrauchsstellung einnehmen, in welcher sie über die Ladeplattform nach oben ragen und Anschläge bilden, welche die Beweglichkeit von Rollbehältern begrenzen.

Der Erfindung liegt die Aufgabe zugrunde, eine gattungsgemäße Ladebordwand dahingehend zu verbessern, dass sie eine möglichst uneingeschränkte Nutzung der Ladebordwand, aber mit verbesserter Sicherheit für den Benutzer, ermöglicht. Weiterhin liegt der Erfindung die Aufgabe zugrunde, eine Sturzsicherung anzugeben, die mit geringem konstruktivem Aufwand an einer vorhandenen Ladebordwand montiert werden kann, um so eine vorschlagsgemäße Ausgestaltung der Ladebordwand zu erreichen.

Diese Aufgabe wird durch eine Ladebordwand mit den Merkmalen des Anspruchs 1 gelöst sowie durch eine Sturzsicherung nach Anspruch 11. Vorteilhafte Ausgestaltungen sind in den Unteransprüchen beschrieben.

Die Erfindung schlägt mit anderen Worten vor, die Stütze der Sturzsicherung nicht an der Plattform zu lagern, sondern vielmehr an einem Ausleger, der seinerseits in Querrichtung schwenkbar ist, also eine in Längsrichtung verlaufende Schwenkachse aufweist. In einer Ruhestellung ist die Stütze liegend ausgerichtet und liegt beispielsweise auf der Plattform der Ladebordwand. Mitsamt dem Ausleger kann die Stütze um die liegende, in Längsrichtung verlaufende Schwenkachse des Auslegers in ihre aufrechte Gebrauchsstellung geschwenkt werden. Sie befindet sich anschließend seitlich neben der Plattform, so dass die Nutzung der Plattform nicht eingeschränkt ist und die Plattform vielmehr auf ihrer gesamten Fläche begangen bzw. befahren werden kann.

Wenn beispielsweise Transportgut auf eine Palette aufgestapelt ist und die Palette mit Hilfe eines Flurförderfahrzeuges bewegt wird, ist neben der Palette ausreichend Platz auf der Plattform vorgesehen, um die erwähnten Steuerungselemente bedienen zu können und dem Benutzer dabei einen sicheren Stand auf der Plattform zu ermöglichen. Durch die vorschlagsgemäße Ausgestaltung der Ladebordwand bleibt dieser Platz nach wie vor nutzbar.

Vorteilhaft kann vorgesehen sein, dass die Stütze ihrerseits schwenkbar an den Ausleger anschließt, und dabei in Längsrichtung schwenkbar ist. Wenn sich die Stütze in ihrer Gebrauchsstellung befindet, verläuft ihre Schwenkachse liegend und in Querrichtung. Die Stütze kann daher aus einer aufrechten, beispielsweise exakt vertikalen Gebrauchsstellung in Längsrichtung nach vorn oder hinten geschwenkt werden, bis in eine schräge Stellung, die als Freigabestellung bezeichnet ist. In dieser Freigabestellung wird ein großer Freiraum bereitgestellt, um beispielsweise die Handhabung einer faltbaren Plattform zu erleichtern.

Beispielsweise kann eine solche faltbare Ladebordwand zwei Plattform-Segmente aufweisen, die um eine Querachse gefaltet werden können, wobei diese Faltachse am hinteren Ende des unteren Segments liegen kann. Zum Auseinanderfalten muss in diesem Fall die Vorderkante des oberen Segments erfasst und angehoben werden. Daher kann in diesem Fall die Stütze aus ihrer Gebrauchsstellung nach vorn in ihre Freigabestellung schwenkbar sein. In der Freigabestellung der Stütze wird die Handhabung des oberen Segments erleichtert, da dessen Vorderkante besonders einfach zugänglich ist.

Vorteilhaft kann vorgesehen sein, dass die Schwenkbewegung der Stütze durch einen Anschlag begrenzt ist, so dass die Stütze aus ihrer Gebrauchsstellung nicht versehentlich abwärts bis auf die Plattform fallen kann, sondern lediglich bis in ihre Freigabestellung schwenkbar ist. Dies erleichtert einerseits die Handhabung der Stütze und bietet andererseits einen Einklemmschutz gegen die ansonsten herabfallende Stütze bzw. das daran befestigte Geländer.

Vorteilhaft kann aus Sicherheitsgründen vorgesehen sein, dass die Stütze in ihrer Gebrauchsstellung arretiert werden kann. Um auch in dieser Hinsicht eine besonders einfache Betätigung der Ladebordwand zu unterstützen, ist eine zum Lösen der Arretierung vorgesehene Handhabe nicht am Schwenklager selbst, also in Nähe der Plattform, sondern vielmehr im Abstand oberhalb von der Plattform angeordnet, beispielsweise in Höhe des Geländers, so dass sie von einem stehenden Benutzer problemlos erreichbar ist.

Diese Arretierung der Stütze kann besonders einfach und betriebssicher dadurch ausgestaltet sein, dass ein Arretierstift mit einer Arretieröffnung zusammenwirkt. Die Stütze ist in ihrer Gebrauchsstellung festgelegt, wenn sich der Arretierstift in die Arretieröffnung erstreckt. Dabei wird der Arretierstift durch eine Feder in dieser Arretieröffnung gehalten, so dass er gegen die Federwirkung aus der Arretieröffnung gezogen werden kann. Von den beiden Arretierelementen in Form des Arretierstifts und der Arretieröffnung ist eines an der Stütze und das andere an dem Ausleger angeordnet.

In Umkehr dieses Arretierungsprinzips kann vorgesehen sein, dass die Arretieröffnung beweglich und federbelastet ist, während der Arretierstift ortsfest verbleibt. Beispielsweise kann die Arretieröffnung als axial bewegliches Rohr ausgestaltet sein, welches auf einen ortsfesten, als Zapfen ausgestalteten Arretierstift geführt werden und diesen umgreifen kann.

Vorteilhaft kann der Ausleger, der die Stütze trägt, als Profilschiene ausgestaltet sein, die sich in Längsrichtung entlang der Plattform erstreckt. Der Ausleger ist durch die Ausgestaltung als Profilschiene in Form eines dementsprechend langen Bauteils ausgestaltet, so dass eine mechanisch besonders hoch belastbare, stabile Lagerung und eine präzise Führung des Auslegers durch eine entsprechend lange Scharnierachse ermöglicht wird. Die Scharnierachse kann durch zwei oder mehr einzelne Scharniere oder durch ein entsprechend langes einzelnes Scharnier definiert werden.

Zugunsten einer hohen Formstabilität, z.B. einer hohen Biegesteifigkeit, kann die Profilschiene einen C- bzw. U-förmigen Querschnitt aufweisen. Dabei können die beiden parallelen Schenkel des C- bzw. U-Profils gleich oder unterschiedlich lang sein, so dass der Profilquerschnitt gegebenenfalls auch als J-förmig bezeichnet werden kann. Zugunsten einer besonders hohen mechanischen Stabilität kann die Profilschiene aus Stahl bestehen. Die Profilschiene kann als gezogenes Strangpressprofil ausgestaltet sein oder, was insbesondere bei kleineren Stückzahlen besonders wirtschaftlich sein kann, als Blechkantteil. Insbesondere eine Ausgestaltung der Profilschiene als Winkelprofil mit einem L-förmigen, oder auch mit einem C- bzw. U-förmigen Querschnitt eignet sich für eine Herstellung als Blechkantteil.

Aus Gründen der Gewichtseinsparung kann vorteilhaft vorgesehen sein, den Ausleger dort zusätzlich auszusteifen, wo die Stütze an den Ausleger anschließt. Knotenbleche, Rippen oder dergleichen können daher in diesem Bereich an dem Ausleger vorgesehen sein.

Vorteilhaft kann nicht nur die Stütze am Ausleger in ihrer Gebrauchsstellung arretierbar sein, sondern auch der Ausleger selbst kann vorteilhaft an der Ladebordwand verriegelbar sein, wenn er so weit geschwenkt ist, dass sich die Sturzsicherung in ihrer Gebrauchsstellung befindet. Auf diese Weise kann zuverlässig sichergestellt werden, dass die Sturzsicherung nicht versehentlich aus ihrer Gebrauchsstellung gebracht werden kann.

Ähnlich wie für die Arretierung der Stütze kann auch die Verriegelung des Auslegers mittels zweier als Riegelstift und Riegelöffnung ausgestalteter Riegelelemente erfolgen, so dass an dieser Stelle, was die konstruktive Ausgestaltung der Verriegelung betrifft, auf die beschriebene Ausgestaltung der Arretierung verwiesen wird.

Die vorschlagsgemäße Sturzsicherung kann nachträglich an einer Vielzahl unterschiedlicher, handelsüblicher Ladebordwände nachgerüstet werden - vermutlich an jeder. Vorteilhaft kann vorgesehen sein, eine Ladebordwand direkt herstellerseitig mit einer derartigen Sturzsicherung zu versehen. So kann unmittelbar ab dem Zeitpunkt der Auslieferung einer Ladebordwand an den Kunden gewährleistet werden, dass diese Ladebordwand einerseits möglichst uneingeschränkt genutzt werden kann wie eine Ladebordwand ohne Sturzsicherung, nämlich auf ihrer gesamten Fläche begangen oder befahren werden kann, und dass gleichzeitig dem Benutzer die verbesserte Sicherheit mittels der Sturzsicherung geboten wird.

Dabei wird die Sturzsicherung vorteilhaft in der Nähe der fußbetätigten Steuerelemente angeordnet, falls die Ladebordwand solche aufweist, denn insbesondere in der Nähe dieser Steuerelemente hält sich der Benutzer erfahrungsgemäß am Rand der Plattform der Ladebordwand auf, so dass in diesem Bereich der Ladebordwand die Gefahr besonders groß ist, von der Plattform abzustürzen. Die Steuerelemente sind üblicherweise nahe einer der beiden Seiten der Plattform angeordnet, so dass dementsprechend die Sturzsicherung vorteilhaft seitlich neben den Steuerelementen angeordnet ist, und zwar an der Seite der Plattform, an welcher sich auch die Steuerelemente befinden, also den Steuerelementen benachbart.

Ein Ausführungsbeispiel der Erfindung wird anhand der rein schematischen Darstellungen nachfolgend näher erläutert. Dabei zeigt
- Fig. 1: eine perspektivische Ansicht von schräg oben auf einen Bereich der Plattform einer Ladebordwand, die mit einer Sturzsicherung versehen ist, wobei sich die Sturzsicherung in ihrer Ruhestellung befindet,
- Fig. 2: eine Ansicht ähnlich Fig. 1, wobei sich die Sturzsicherung in ihrer Gebrauchsstellung befindet,
- Fig. 3: eine Ansicht ähnlich Fig. 2,, wobei sich eine Stütze der Sturzsicherung in ihrer Freigabestellung befindet,
- Fig. 4: eine andere perspektivische Ansicht schräg von außen und oben auf die Ladebordwand von Fig. 1, und
- Fig. 5: eine andere perspektivische Ansicht schräg von außen und oben auf die Ladebordwand von Fig. 2.

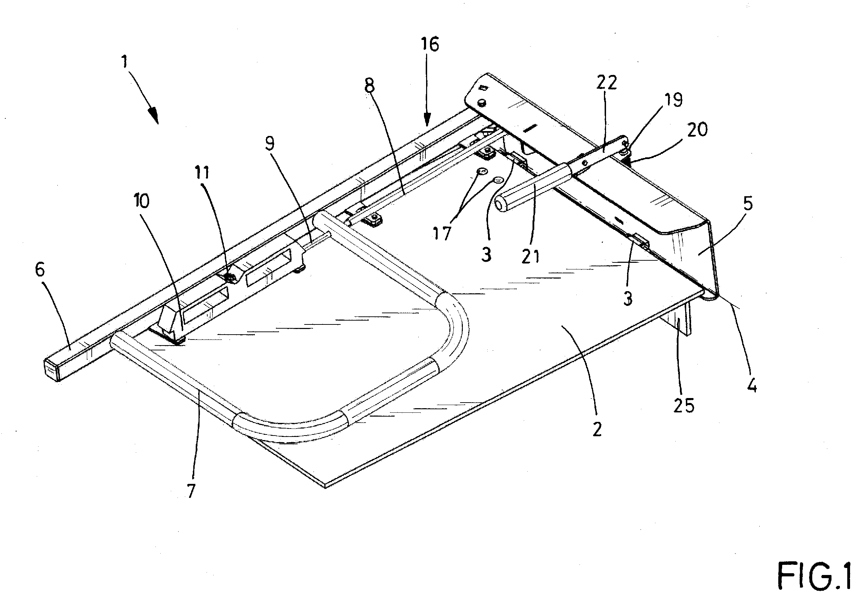

In Fig. 1 ist mit 1 insgesamt eine Ladebordwand bezeichnet, wobei aus Übersichtlichkeitsgründen etliche Elemente der Ladebordwand 1 nicht dargestellt sind, beispielsweise sämtliche strukturellen Elemente, welche eine Plattform 2 der Ladebordwand 1 tragen, sowie sämtliche Elemente, die für eine Höhenbeweglichkeit der Plattform 2 vorgesehen sind. Die Plattform 2 ist zudem nicht vollständig, sondern lediglich teilweise dargestellt; insbesondere kann der dargestellte Teil der Plattform 2 eines von zwei Segmenten einer an sich bekannten, faltbaren Plattform zeigen, wobei die zwei Segmente um eine quer verlaufende Scharnierachse faltbar sind. Fig. 1 zeigt außer der Plattform 2, in welche Steuerelemente 17 integriert sind, eine als Sturzsicherung 16 bezeichnete Baugruppe als Teil der Ladebordwand 1.

An einer Längsseite der Plattform 2 bilden zwei einzelne Scharniere 3 eine liegende, in Längsrichtung verlaufende und gestrichelt angedeutete Schwenkachse 4, um welche ein Ausleger 5 schwenkbar ist. Es kann vorgesehen sein, abweichend von dem dargestellten Ausführungsbeispiel mehr oder längere als die zwei dargestellten Scharniere 3 zu verwenden. Der Ausleger 5 ist als Profilschiene ausgestaltet und weist einen U-förmigen Querschnitt auf, wobei die beiden parallelen Schenkel dieses Querschnitts sich unterschiedlich weit von der mittleren Basis aus erstrecken, so dass der Querschnitt auch als im Wesentlichen J-förmig bezeichnet werden kann.

Eine Stütze 6 ist am Ausleger 5 gelenkig gelagert. Sie trägt ein Geländer 7, welches als U-förmig verlaufender Bügel ausgestaltet ist. Abweichend von dem dargestellten Ausführungsbeispiel kann das Geländer 7 als Platte ausgestaltet sein. Auch können abweichend von dem dargestellten Ausführungsbeispiel weitere Stützen vorgesehen sein, beispielsweise zwei parallele Stützen, die zwischen sich eine oder mehrere Streben oder Platten aufweisen. Zugunsten einer hohen Beweglichkeit ist es vorteilhaft, dass nur eine Stütze an den Ausleger 5 anschließt, wie noch näher erläutert werden wird.

Weiterhin trägt die Stütze 6 ein Führungsrohr 8, durch welches sich ein Arretierstift 9 erstreckt, der mit einem Griff 10 verbunden ist. Der Arretierstift 9 ist innerhalb des Führungsrohrs 8 in axialer Richtung längsbeweglich geführt und wird durch eine nicht dargestellte Feder in seiner erwähnten Arretierstellung gehalten. Mittels einer am Griff 10 angeordneten und als Druckknopf ausgestalteten Handhabe 11 kann der Arretierstift 9 aus seiner Arretierstellung gelöst werden, so dass er anschließend mittels des Griffs 10 axial verschoben werden kann, wie später noch näher erläutert wird.

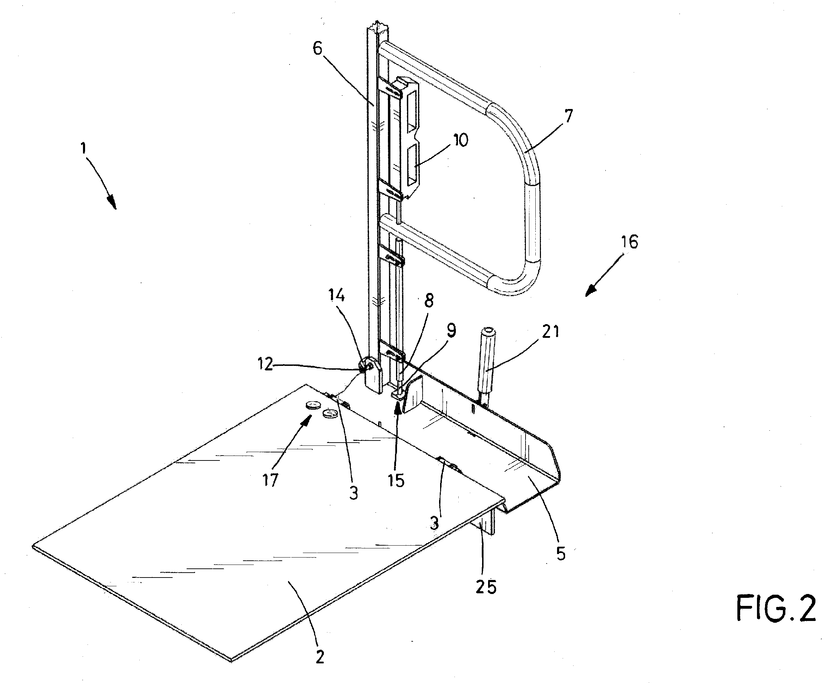

Fig. 1 zeigt die Ladebordwand 1 und deren Sturzsicherung 16 in der Ruhestellung. In dieser Ruhestellung kann die Ladebordwand 1 beispielsweise unter einen Ladeboden eines LKWs geschoben werden. Wenn der LKW be- oder entladen werden soll und dazu ein Höhenunterschied zwischen dem Untergrund und dem Ladeboden überwunden werden soll, werden die Ladebordwand 1 und deren Sturzsicherung aus ihrer Ruhestellung in eine Gebrauchsstellung gebracht, die in Fig. 2 dargestellt ist: Ausgehend von der Ruhestellung der Fig. 1 wird der Ausleger 5 um die Schwenkachse 4 nach außen - also von der Plattform 2 weg - geschwenkt, bis der U-förmige Querschnitt der Profilschiene nach oben offen ausgerichtet ist. Diese Schwenkbewegung wird durch einen in Fig. 2 nicht ersichtlichen Anschlag begrenzt, und der Ausleger 5 wird in dieser nach außen geschwenkten Stellung verriegelt, wie später noch näher erläutert wird. Die Schwenkbewegung der Sturzsicherung 16 um die Schwenkachse 4 kann bewirkt werden, indem die Stütze 6 oder der Griff 10 erfasst und angehoben wird, bis die Stütze 6 aufrecht ausgerichtet ist und sich die gesamte Sturzsicherung 16 in Ihrer Gebrauchsstellung befindet.

Fig. 2 zeigt diese aufrechte Stellung der Stütze 6, die auch als Gebrauchsstellung der Stütze 6 bezeichnet ist, und in welcher das untere Ende des Arretierstifts 9 in eine Arretieröffnung 15 eintaucht. Nach Betätigung der Handhabe 11, also einem Druck auf den Druckknopf, kann der Griff 10 mitsamt dem Arretierstift 9 gegen die Wirkung der nicht dargestellten Feder angehoben werden und der Arretierstift 9 nach oben aus der Arretieröffnung 15 gezogen werden, so dass dann die Stütze 6 um eine Achse 12 nach vorn oder nach hinten geschwenkt werden kann.

In Fig. 2 stellen sämtliche dargestellten Bauteile mit Ausnahme der Plattform 2 eine Sturzsicherung 16 dar, die Gegenstände und Personen, welche sich auf der Plattform 2 befinden, vor einem Sturz von der Plattform 2 schützt. Die Sturzsicherung 16 ist seitlich neben und nahe den Steuerelementen 17 angeordnet, die rein schematisch als einzelne, in die Plattform 2 integrierte Fußschalter angedeutet sind. Durch Betätigung der Steuerelemente 17 kann die Ladebordwand 1 angehoben oder abgesenkt werden.

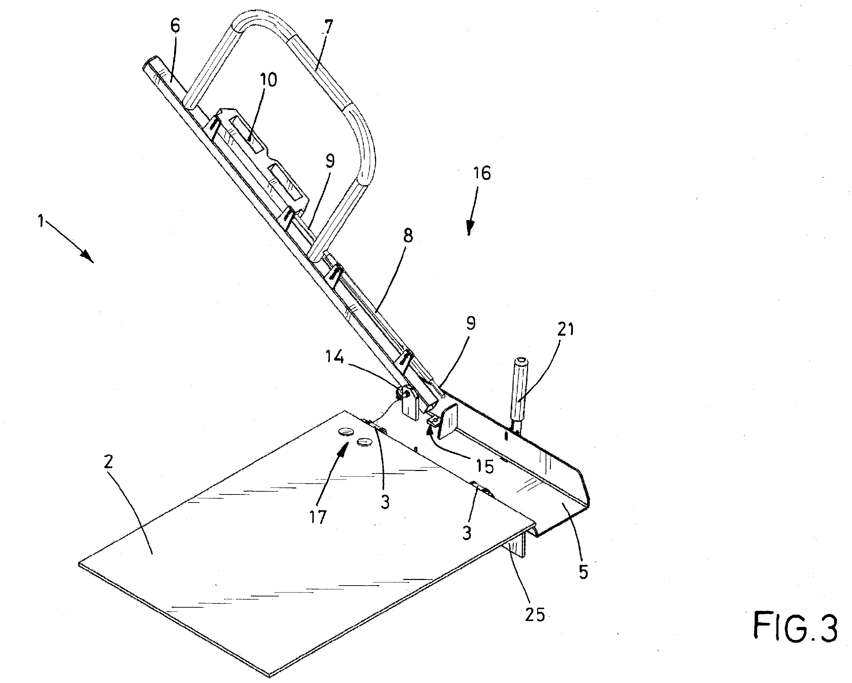

Fig. 3 zeigt die Ladebordwand 1 mit dem nach außen geschwenkten Ausleger 5. Wenn der Ausleger 5 der Sturzsicherung 16 diese Gebrauchsstellung einnimmt, kann die Stütze 6 aus ihrer aufrechten Gebrauchsstellung um die liegende, in Querrichtung verlaufende Achse 12 in Längsrichtung geschwenkt werden. Fig. 3 zeigt eine Situation, in welcher die Stütze 6 aus ihrer Gebrauchsstellung nach vorn geschwenkt ist, bis ein Anschlag 14 diese Schwenkbewegung begrenzt hat. Diese Stellung wird als so genannte Freigabestellung der Stütze 6 bezeichnet. Aus Fig. 3 ist weiterhin ersichtlich, dass die Arretieröffnung 15 am Ausleger 5 freiliegt, in welche sich ansonsten das untere Ende des Arretierstifts 9 erstreckt, wenn die Stütze 6 in ihrer Gebrauchsstellung aufrecht ausgerichtet ist. Diese Schwenkbeweglichkeit und somit die Möglichkeit, die Stütze 6 zwischen der Gebrauchs- und der Freigabestellung zu bewegen, wird dadurch vereinfacht, dass lediglich eine einzige Stütze 6 vorgesehen ist und diese an den Ausleger 5 gelenkig anschließt.

Die Freigabestellung der Stütze 6 dient dazu, die Handhabung der Ladebordwand 1 und insbesondere deren Sturzsicherung 16 vor und nach dem Gebrauch der Ladebordwand 1 zu erleichtern, beispielsweise im Falle der erwähnten faltbaren Ladebordwand 1 die Handhabung der beweglichen Segmente der Plattform 2 zu erleichtern. Je nach Konstruktion der Ladebordwand 1 und insbesondere von deren Plattform 2 kann es vorteilhaft sein, die Stütze 6 aus ihrer Gebrauchsstellung nach vorn in ihre Freigabestellung zu schwenken, oder nach hinten, oder eine Beweglichkeit in beide Richtungen zu ermöglichen. Außerdem kann ggf. die Konstruktion der Ladebordwand derart ausgestaltet sein, dass es nicht erforderlich ist, die Stütze 6 in eine Freigabestellung zu verbringen. Die Stütze 6 kann in solchen Fällen, abweichend von dem dargestellten Ausführungsbeispiel, eine andere oder zwei oder gar keine Freigabestellungen einnehmen. Nachdem die Ladebordwand 1 gebrauchsfertig eingerichtet ist, wird bei dem dargestellten Ausführungsbeispiel die Stütze 6 aus ihrer Freigabestellung gemäß Fig. 3 in die Gebrauchsstellung gemäß Fig. 2 gebracht und in dieser Gebrauchsstellung arretiert.

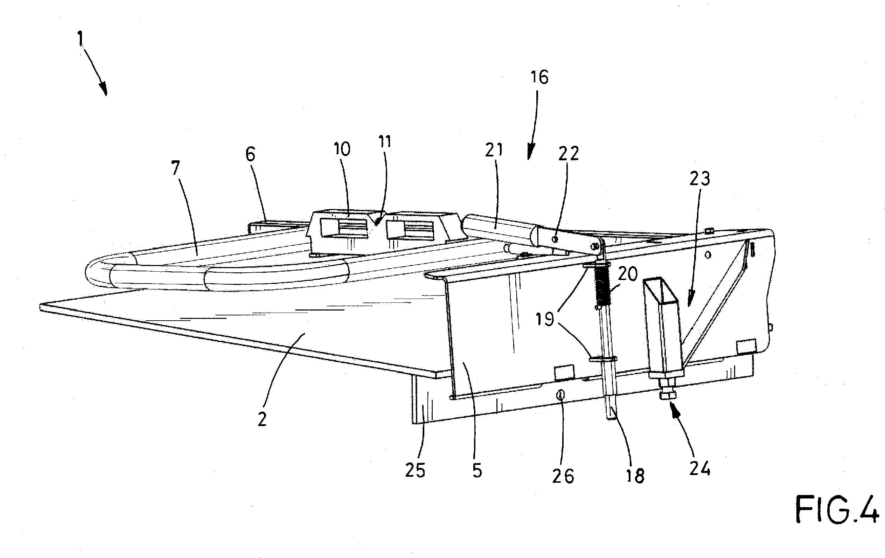

Fig. 4 zeigt aus einer anderen Perspektive eine Ansicht auf die Außenseite der Ladebordwand 1. Die Sturzsicherung 16 befindet sich in ihrer Ruhestellung wie in Fig. 1. Weiterhin ist ein Riegelelement in Form eines Riegelstiftes 18 ersichtlich, der in zwei Laschen 19 geführt ist und durch eine Feder 20 in seine Riegelstellung gedrängt ist, die hier nach unten weist. Aufgrund der Ausrichtung des Auslegers 5 ist der Riegelstift 18 in dieser Stellung gemäß Fig. 4 jedoch momentan funktionslos.

An das obere Ende des Riegelstifts 18 schließt gelenkig ein Hebel 21 an, der bei einer Lagerungsstelle 22 schwenkbar gelagert ist und sich liegend oberhalb der Plattform 2, also beispielsweise parallel zur Stütze 6, erstreckt. Durch eine entsprechende Schwenkbewegung dieses Hebels 21 kann der Riegelstift 18 gegen die Wirkung der Feder 20 bewegt werden. In der Ruhestellung gemäß Fig. 4 ist eine solche Bewegung des Hebels 21 abwärts gerichtet, also auf die Plattform 2 zu. Wenn sich die Sturzsicherung 16 in ihrer Gebrauchsstellung befindet bedeutet dies, dass der Hebel 21 von der Außenseite des Auslegers 5 her nach innen bewegt werden muss, in Richtung zur Plattform 2, um die Arretierung zu lösen. Eine versehentliche Betätigung durch eine Person, die sich auf der Plattform 2 aufhält, ist daher praktisch ausgeschlossen, da bei einem versehentlichen Fußkontakt der Hebel 21 eher nach außen gedrückt als nach innen bewegt würde.

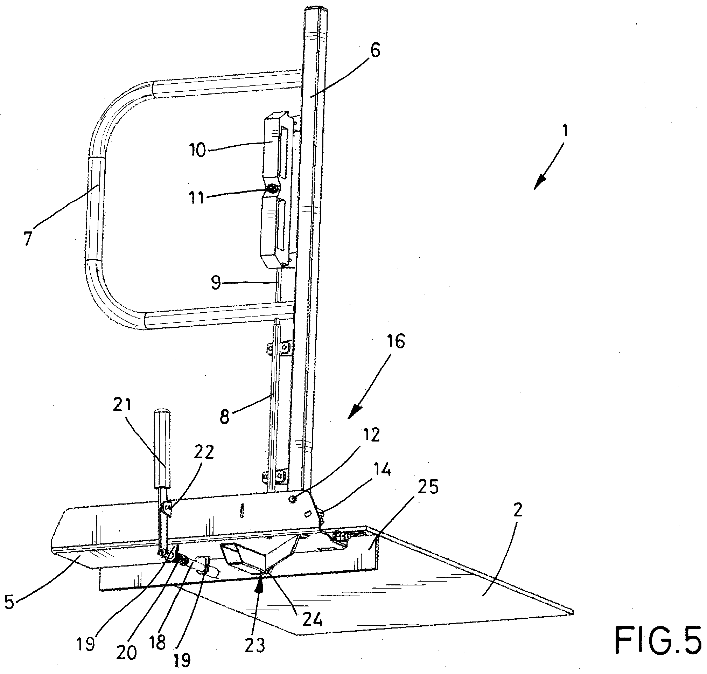

In Fig. 4 ist an der Unterseite des Auslegers 5 eine etwa V-förmige Aussteifung 23 ersichtlich, die aus einem Vierkantrohr und einer daran schräg anschließenden Strebe gebildet ist. Diese Aussteifung 23 befindet sich unter dem Bereich, wo die Strebe 6 und die Arretieröffnung 15 an den Ausleger 5 anschließen. Das Vierkantrohr der Aussteifung 23 nimmt zudem einen Schwenkanschlag 24 auf, der gegen einen Längsträger 25 der Ladebordwand 1 gerät, wenn die Sturzsicherung 16 aus ihrer Ruhestellung in die Gebrauchsstellung geschwenkt wird. Der Schwenkanschlag 24 weist eine Mutter auf, in welcher eine Schraube geführt ist, deren Schraubenkopf später dem Längsträger 25 anliegt. Somit ist der Schwenkanschlag 24 verstellbar und ermöglicht es, die gewünschte Ausrichtung der Sturzsicherung 16 und insbesondere der Stütze 6 in der Gebrauchsstellung zu justieren.
Weiterhin zeigt Fig. 4 in dem Längsträger 25 eine Riegelöffnung 26. Wenn der Ausleger 5 aus seiner Ruhestellung von Fig. 4 nach außen geschwenkt wird, bis die Sturzsicherung 16 ihre Gebrauchsstellung einnimmt, gelangen bei dieser Schwenkbewegung die Stütze 6 und der Hebel 21 in eine aufrechte Position. Fig. 5 zeigt diese Gebrauchsstellung.

Der Riegelstift 18 gerät dabei gleichzeitig in eine liegende Position, in welcher er sich mit seinem freien, vom Hebel 21 entfernten Ende unter die Plattform 2 erstreckt und in die Riegelöffnung 26 des Längsträgers 25 eingreift. Diese Verriegelung erfolgt ähnlich wie die Verrastung bei dem Arretierstift 9 und der Arretieröffnung 15, so dass der Ausleger 5 in seiner nach außen geschwenkten Gebrauchsstellung fixiert ist. Mittels des Hebels 21 kann später der Riegelstift 18 aus der Riegelöffnung 26 herausgezogen werden, so dass dann die Sturzsicherung 16 aus ihrer Gebrauchsstellung wieder in die Ruhestellung zurück geschwenkt werden kann.

### Bezugszeichen:

- 1: Ladebordwand
- 2: Plattform
- 3: Scharnier
- 4: Schwenkachse
- 5: Ausleger
- 6: Stütze
- 7: Geländer
- 8: Führungsrohr
- 9: Arretierstift
- 10: Griff
- 11: Handhabe
- 12: Achse
- 14: Anschlag
- 15: Arretieröffnung
- 16: Sturzsicherung
- 17: Steuerelemente
- 18: Riegelstift
- 19: Lasche
- 20: Feder
- 21: Hebel
- 22: Lagerungsstelle
- 23: Aussteifung
- 24: Schwenkanschlag
- 25: Längsträger
- 26: Riegelöffnung

## Patentansprüche

1. Ladebordwand (1),
mit einer höhenverstellbaren Plattform (2)
und mit einer Sturzsicherung (16),
die eine aufrechte Stütze (6) aufweist,
und einem von der Stütze (6) getragenen Geländer (7),
wobei die Stütze (6) zwischen einer liegenden Ruhestellung und ihrer aufrechten Gebrauchsstellung schwenkbar ist,
**dadurch gekennzeichnet,**
**dass** die Stütze (6) an einem Ausleger (5) gehalten ist,
und **dass** der Ausleger (5) mitsamt der Stütze (6) um eine liegende, in Längsrichtung verlaufende Schwenkachse quer zur Längsrichtung schwenkbar gelagert ist zwischen der Ruhestellung und der Gebrauchsstellung, derart, dass die Stütze (6), wenn sich der Ausleger (5) in seiner Gebrauchsstellung befindet, seitlich neben der Plattform (2) angeordnet ist.

2. Ladebordwand nach Anspruch 1,
**dadurch gekennzeichnet,**
**dass** die Stütze (6) in Längsrichtung schwenkbar an dem Ausleger (5) gelagert ist
und aus ihrer Gebrauchsstellung in Längsrichtung bis in eine schräg stehende Freigabestellung schwenkbar ist.

3. Ladebordwand nach Anspruch 2,
**gekennzeichnet durch**
einen die Schwenkbewegung der Stütze (6) in ihre Freigabestellung begrenzenden Anschlag (14).

4. Ladebordwand nach einem der vorhergehenden Ansprüche,
**dadurch gekennzeichnet,**
**dass** die Stütze (6) in ihrer Gebrauchsstellung arretierbar ist,
wobei eine Handhabe (11) zum Lösen der Arretierung im Abstand oberhalb von der Plattform (2) angeordnet ist.

5. Ladebordwand nach Anspruch 4,
**dadurch gekennzeichnet,**
**dass** die Handhabe (11) auf Höhe des Geländers (7) angeordnet ist.

6. Ladebordwand nach Anspruch 4 oder 5,
**dadurch gekennzeichnet,**
**dass** als erstes Arretierelement ein durch eine Feder belasteter, axial beweglicher Arretierstift (9) vorgesehen ist,
und als zweites Arretierelement eine Arretieröffnung (15) vorgesehen ist, in welche der Arretierstift (9) eingreift, wenn sich die Stütze (6) in der Gebrauchsstellung befindet,
wobei der Arretierstift (9) gegen die Wirkung der Feder aus der Arretieröffnung (15) beweglich ist,
und wobei eines der Arretierelemente an der Stütze (6) und das andere Arretierelement an dem Ausleger (5) angeordnet ist.

7. Ladebordwand nach einem der vorhergehenden Ansprüche,
**dadurch gekennzeichnet,**
**dass** der Ausleger (5) als Profilschiene ausgestaltet ist, welche sich in Längsrichtung entlang der Plattform (2) erstreckt.

8. Ladebordwand nach einem der vorhergehenden Ansprüche,
**dadurch gekennzeichnet,**
**dass** der Ausleger (5) in der Gebrauchsstellung an der Ladebordwand (1) verriegelbar ist.

9. Ladebordwand nach Anspruch 8,
**dadurch gekennzeichnet,**
**dass** als erstes Riegelelement ein durch eine Feder (20) belasteter, axial beweglicher Riegelstift (18) vorgesehen ist, und als zweites Riegelelement eine Riegelöffnung vorgesehen ist, in welche der Riegelstift (18) eingreift, wenn sich der Ausleger (5) in der Gebrauchsstellung befindet,
wobei der Riegelstift (18) gegen die Wirkung der Feder (20) aus der Riegelöffnung beweglich ist,
und wobei eines der Riegelelemente an dem Ausleger (5) und das andere Riegelelement an der Ladebordwand (1) angeordnet ist.

10. Ladebordwand nach einem der vorhergehenden Ansprüche,
**dadurch gekennzeichnet,**
**dass** die Plattform (2) mit fußbetätigten Steuerelementen (17) ausgestattet ist,
und **dass** die Sturzsicherung (16), wenn sich das Geländer (7) in seiner Gebrauchsstellung befindet, seitlich neben den Steuerelementen (17) und diesen benachbart angeordnet ist.

## Claims

1. Tail-lift (1),
having a height-adjustable platform (2)
and having a fall protection (16) that incorporates an upright support (6) and a hand-rail (7) carried on the support (6),
where the support (6) can be swivelled between a horizontal rest position and an upright use position,
**characterised in**
**that** the support (6) is held on a projecting arm (5),
and **that** the projecting arm (5) together with the support (6) can be swivelled at right angles to the longitudinal axis between the rest position and the use position about a swivel axle extending horizontally in a longitudinal direction,
such that, when the projecting arm (5) is in the use position, the support (6) is positioned at the side of the platform (2).

2. Tail-lift in accordance with claim 1,
**characterised in**
**that** the support (6) is swivellably mounted on the projecting arm (5) and can be swivelled in a longitudinal direction out of the use position into a diagonally oriented release position.

3. Tail-lift in accordance with claim 2,
**characterised by**
a stop (14) that limits the swivelling movement of the support (6) into its release position.

4. Tail-lift in accordance with any one of the foregoing claims,
**characterised in**
**that** the support (6) can be locked in its use position,
where an actuator (11) to release the lock is positioned a little way above the platform (2).

5. Tail-lift in accordance with claim 4,
**characterised in**
**that** the actuator (11) is disposed at the same height as the hand-rail (7).

6. Tail-lift in accordance with claim 4 or 5,
**characterised in**
**that** a spring-loaded, axially movable locking pin (9) is provided for as a first locking element
and a locking pin socket (15) is provided for in which the locking pin (9) engages when the support (6) is in the use position,
where the locking pin (9) can be moved out of the locking pin socket (15) against the force of the spring,
and where one of the locking elements is disposed on the support (6) and the other locking element is disposed on the projecting arm (5).

7. Tail-lift in accordance with any one of the foregoing claims,
**characterised in**
**that** the projecting arm (5) is constructed as a profiled rail that extends along the platform (2) in a longitudinal direction.

8. Tail-lift in accordance with any one of the foregoing claims,
**characterised in**
**that** the projecting arm (5) can be interlocked with the tail-lift (1) in the use position.

9. Tail-lift in accordance with claim 8,
**characterised in**
**that** an axially movable locking bolt (18) to which a force is applied by means of a spring (20) is provided for as a first locking bolt element
and a locking bolt socket in which the locking bolt (18) engages when the projecting arm (5) is in the use position is provided for as a second locking bolt element,
where the locking bolt (18) can be moved out of the locking bolt socket against the force of the spring (20),
and where one of the locking bolt elements is disposed on the projecting arm (5) and the other locking bolt element is disposed on the tail-lift (1).

10. Tail-lift in accordance with any one of the foregoing claims,
**characterised in**
**that** the platform (2) is fitted with foot-actuated control elements (17),
and **that**, when the hand-rail (7) is in the use position, the fall protection (16) is positioned at the side of and adjacent to the control elements (17).

## Revendications

1. Hayon élévateur (1)
avec plate-forme réglable en hauteur (2)
et avec une protection antichute (16), présentant un appui vertical (6),
et un garde-fou (7) supporté par l'appui (6),
sachant que l'appui (6) peut pivoter entre une position de repos couchée et sa position d'utilisation verticale,
**caractérisé en ce que**
l'appui (6) est retenu contre une flèche (5)
et que la flèche (5) et l'appui (6) sont en appui pivotant - autour d'un axe de pivotement présentant un tracé dans le sens longitudinal - transversalement au sens longitudinal, entre la position de repos et la position d'utilisation,
de sorte que l'appui (6), lorsque la flèche (5) se trouve sur sa position d'utilisation, est disposé latéralement à côté de la plate-forme (2).

2. Hayon élévateur selon la revendication 1,
**caractérisé en ce que**
l'appui (6) est en appui pivotant dans le sens longitudinal contre la flèche (5) et qu'il peut pivoter de sa position d'utilisation dans le sens longitudinal jusque sur une position de déblocage oblique.

3. Hayon élévateur selon la revendication 2,
**caractérisé par**
une butée (14) limitant le mouvement pivotant de l'appui (6) sur sa position de déblocage.

4. Hayon élévateur selon l'une des revendications précédentes,
**caractérisé en ce que**
l'appui (6) peut être retenu sur sa position d'utilisation,
sachant qu'un dispositif manuel (11) permettant de débloquer le moyen de retenue est disposé à distance au-dessus de la plate-forme (2).

5. Hayon élévateur selon la revendication 4,
**caractérisé en ce que**
le dispositif manuel (11) est disposé à la hauteur du garde-fou (7).

6. Hayon élévateur selon la revendication 4 ou 5,
**caractérisé en ce que**
comme premier élément de retenue est prévue une tige de retenue (9) mobile axialement se trouvant sous contrainte ressort,
et comme deuxième élément de retenue est prévu un orifice de retenue (15) dans lequel engrène la tige de retenue (9) lorsque l'appui (6) se trouve en position d'utilisation,
sachant que la tige de retenue (9) est déplaçable hors de l'orifice de retenue (15) en vainquant l'effet du ressort,
et sachant que l'un des éléments de retenue est disposé contre l'appui (6) et que l'autre élément de retenue est disposé contre la flèche (5).

7. Hayon élévateur selon l'une des revendications précédentes,
**caractérisé en ce que**
la flèche (5) est configurée en rail profilé s'étendant le long de la plate-forme (2) dans le sens longitudinal.

8. Hayon élévateur selon l'une des revendications précédentes,
**caractérisé en ce que**
la flèche (5), lorsqu'en position d'utilisation, est verrouillable contre le hayon élévateur (1).

9. Hayon élévateur selon la revendication 8,
**caractérisé en ce que**
comme premier élément de verrouillage est prévue une tige de verrouillage (18), sous contrainte ressort (20), déplaçable axialement,
et comme deuxième élément de verrouillage est prévu un orifice de verrouillage dans lequel engrène la tige de verrouillage (18) lorsque la flèche (5) se trouve en position d'utilisation,
sachant que la tige de verrouillage (18) est déplaçable hors de l'orifice de verrouillage en vainquant l'effet du ressort (20),
et sachant que l'un des éléments de verrouillage est disposé contre la flèche (5) et l'autre élément de verrouillage est disposé contre le hayon élévateur (1).

10. Hayon élévateur selon l'une des revendications précédentes,
**caractérisé en ce**
**que** la plate-forme (2) est équipée d'éléments de commande (17) actionnés par le pied,
et **que** la sécurité antichute (16), lorsque le garde-fou (7) se trouve sur sa position d'utilisation, est disposée latéralement à côté des éléments de commande (17) et au voisinage de ceux-ci.
